# EUROPEAN PATENT APPLICATION

(11) **EP 2 680 427 A1**
(43) Date of publication of application: **01.01.2014**
(21) Application number: 11859567.7
(22) Date of filing: 07.11.2011
(51) Int. Cl.: H02M 7/48, F04B 39/00, H02M 1/44

(54) **INVERTER INTEGRATED MOTOR-DRIVEN COMPRESSOR**

(30) Priority: 22.02.2011 JP 2011036127
(71) Applicant: Mitsubishi Heavy Industries Automotive Thermal Systems Co., Ltd., Aichi 452-8561 (JP)
(72) Inventor: NAGASAKA, Keiji, Tokyo 108-8215 (JP); NAKANO, Koji, Tokyo 108-8215 (JP)
(74) Representative: Henkel, Breuer & Partner
(86) International application number: PCT/JP2011/075542
(87) International publication number: WO 2012/114584

(57) **Abstract**

An object is to provide an integrated-inverter electric compressor with which it is possible to reduce electromagnetic radiation noise, it is also possible to reduce the amount of external current leakage, and, additionally, even the amount of external current flow from an earth wire, and, moreover, it is possible to reduce the size, weight, and cost of a noise-reduction circuit. In an integrated-inverter electric compressor (1) in which an inverter (5) that controls power to be applied to an electric motor (3) is integrally installed in a housing (2) that contains, inside thereof, a compression mechanism and the electric motor (3) that drives the compression mechanism, impedances (Z) having the same capacitance are individually inserted and connected between the housing (2), which is chassis-grounded and into which harmonic currents from the inverter (5) and the electric motor (3) flow, and PN lines (7) that supply power from a power source to the inverter (5).

## Description

### {Technical Field}

The present invention relates to an integrated-inverter electric compressor in which an inverter is integrally installed.

### {Background Art}

In an electric compressor employed in a vehicle air conditioning device of an electric vehicle (EV), a hybrid vehicle (HEV), and so forth, a housing that contains a compression mechanism and an electric motor that drives the compression mechanism has, integrally installed therein, an inverter that coverts DC power supplied from a power-source unit via a high-voltage line (HV line) into three-phase AC power and applies it to the electric motor to drive the electric motor. In such an integrated-inverter electric compressor, because the electric potentials of the electric motor driven by the inverter and that of the inverter are controlled by means of PWM (Pulse Width Modulation), a large number of harmonics are contained therein.

In the electric compressor described above, because stray capacitance exists between the housing and both the inverter and the electric motor, generated harmonic currents flow in the conductive housing and flow into the vehicle body via an earth wire of the chassis-grounded housing which is grounded to the chassis. Because stray capacitance also exists between the vehicle body and a vehicle battery (power-source unit), the harmonic currents that have flowed into the vehicle body form a current loop in which the currents flow toward the HV line of the integrated-inverter electric compressor through the vehicle battery. Although these harmonic currents result in electromagnetic radiation noise, the current loop that flows toward the high-voltage line through the vehicle body causes large radiation noise because of the large area, and, if the noise is in the AM band, it acts as a radio-noise source.

In order to block these harmonic currents in the AM broadcasting frequency band, measures have generally been taken whereby a common-mode coil is inserted in the HV line that supplies high voltage to the integrated-inverter electric compressor so as to form a high impedance against the harmonic currents. However, the common-mode coil must be inserted in the HV line, and, because large currents on the order of several tens of amperes flow in the HV line, the common-mode coil naturally becomes large, and thus, there are inherent problems of increased size, increased costs, and so on.

Thus, in order to reduce noise currents that flow in an inverter circuit, Patent Literature 1 discloses an invention in which, in a rectification circuit connected to an AC power source and a power converting device in which a smoothing circuit and an inverter circuit are connected to DC outputs of this rectification circuit, a series circuit including a capacitor C and an impedance element L, which bypasses leakage currents (harmonic-containing noise currents) from the electrostatic capacitance between a motor and an earth terminal to both DC-output terminals (PN lines) of the rectification circuit, is connected between the DC output terminals of the rectification circuit and an earth wire of the motor.

### {Citation List}

### {Patent Literature}

{PTL 1} Japanese Unexamined Patent Application, Publication No. 2003-235269

### {Summary of Invention}

### {Technical Problem}

However, in the invention disclosed in Patent Literature 1 described above, the noise currents that have flowed to the earth wire from the motor are bypassed to the DC-output terminals (PN lines) of the rectification circuit from the earth wire via the LC series circuit. Accordingly, because the current loop in which the noise currents flow includes the earth wire, which increases the area thereof, the radiation noise inevitably becomes large, and thus, the noise-reduction effect is limited. In particular, because strict restrictions are imposed on vehicle-installed equipment with respect to electromagnetic radiation noise, there is a demand for measures for further reducing electromagnetic radiation noise.

The present invention has been conceived in light of the above-described circumstances, and an object thereof is to provide an integrated-inverter electric compressor with which it is possible to reduce electromagnetic radiation noise, it is also possible to reduce the amount of external current leakage and, additionally, even the amount of external current flow from an earth wire, and, moreover, it is possible to reduce the size, weight, and cost of a noise-reduction circuit.

### {Solution to Problem}

In order to solve the problems described above, an integrated-inverter electric compressor of the present invention employs the following solutions.
Specifically, an integrated-inverter electric compressor according to an aspect of the present invention is an integrated-inverter electric compressor in which an inverter that controls power to be applied to an electric motor is integrally installed in a housing that contains, inside thereof, a compression mechanism and the electric motor that drives the compression mechanism, wherein impedances having the same capacitance are individually inserted and connected between the housing, which is chassis-grounded and into in which harmonic currents from the inverter and the electric motor flow, and PN lines that supply power from a power source to the inverter.

With the integrated-inverter electric compressor in which the housing contains the inverter and the electric motor inside thereof, because stray capacitance exists between the housing and both the inverter and the electric motor, harmonic currents flow in the housing, resulting in electromagnetic radiation noise. With the present invention, in the integrated-inverter electric compressor in which the inverter is integrally installed in the housing, because the impedances having the same capacitance are individually inserted and connected between the chassis-grounded housing, in which the harmonic currents from the inverter and the electric motor flow, and the PN lines that supply the power from the power source to the inverter, noise currents can be returned to the generating source thereof by bypassing, for example, the above-described harmonic currents in the target frequency band that act as radio-noise sources or the like to a small current loop, which is formed completely inside the integrated-inverter electric compressor, via the conductive housing by individually inserting and connecting the impedances having the same capacitance between the chassis-grounded housing and the PN lines. Therefore, it is possible to reduce the generated electromagnetic radiation noise and, by covering the compressor with the conductive housing, it is also possible to reduce the amount of external current leakage and, additionally, even the amount of external current flow from the earth wire. In addition, as compared with a conventional system in which a common-mode coil is inserted in a high-voltage (HV) line through which large currents on the order of several tens of amperes flow, it is necessary to merely bypass noise components on the order of several milliamperes, and thus, it is possible to eliminate the need for a large-capacitance common-mode coil and to reduce size, weight, and costs. In particular, in the case of a vehicle-installed integrated-inverter electric compressor for which reduced size and weight are required, the omission of the large-capacitance common-mode coil is highly advantageous in terms of achieving reduced size and weight.

In the above-described integrated-inverter electric compressor, it is preferable that LC series circuits in which capacitors C and coils L are connected in series be employed as the impedances.

By doing so, because the LC series circuits in which the capacitors C and the coils L are connected in series are employed as the impedances, by forming the impedances with series circuits including the capacitors C and the coils L and by setting the resonance frequencies thereof, for example, close to the frequency required for noise reduction, low impedances can be achieved at the target frequency required for the reduction. Therefore, the impedances can be sharply reduced at the target frequency, and, for example, the radio noise in the AM broadcasting frequency band, which is considered problematic, can reliably be reduced.

Furthermore, in the above-described integrated-inverter electric compressor, it is preferable that the LC series circuits be individually inserted and connected in parallel between the housing and the PN lines.

By doing so, because the LC series circuits are individually inserted and connected in parallel between the housing and the PN lines, the impedance characteristics can be balanced at both the positive pole and the negative pole by individually connecting the LC series circuits having the same capacitance in parallel to both PN lines, that is, to both the positive pole and the negative pole. Therefore, it is possible to reliably reduce the common-mode noise in the target frequency band by preventing imbalance.

Additionally, in any of the above-described integrated-inverter electric compressors, it is preferable that the LC series circuit have a circuit configuration in which a circuit including two capacitors C, which have the same capacitance and which are connected in series, is connected between the PN lines, and the coil L is connected between an intermediate point of that series-connected circuit and the housing.

By doing so, because the circuit configuration of the LC series circuit is such that the circuit in which the two capacitors C having the same capacitance are connected in series is connected between the PN lines and the coil L is connected between the intermediate point of that series-connected circuit and the housing, LC series circuits having the same capacitance that would be connected in parallel between the housing and the PN lines can be formed with the two capacitors C and the single coil L. Therefore, as compared with the case in which series circuits including the capacitors C and the coils L are simply connected in parallel, it is possible to further simplify the configuration and to reduce costs by reducing the number of parts.

In addition, in any of the above-described integrated-inverter electric compressors, it is preferable that the impedances be provided on an inverter board between PN terminals of the inverter board side, which is installed in the housing, and an earth terminal connected to the housing.

By doing so, because the impedances are provided on the inverter board between the PN terminals of the inverter board that is installed in the housing and the earth terminal connected to the housing, by installing the impedances (LC series circuits) on the inverter board, it is possible to simplify the installation of the noise-reduction circuits in the inverter and to achieve space saving with respect to the space for installing the inverter itself in the housing. Therefore, it is possible to enhance the ease-of-assembly of the integrated-inverter electric compressor, and it is also possible to enhance the ease-of-installation in a vehicle or the like by realizing size and weight reduction thereof.

### {Advantageous Effects of Invention}

With the present invention, because noise currents can be returned to their generating sources by bypassing, for example, harmonic currents in a target frequency band that act as radio-noise sources or the like to a small current loop, which is formed completely inside an integrated-inverter electric compressor, via the conductive housing by individually inserting and connecting the impedances having the same capacitance between the chassis-grounded housing and PN lines, it is possible to reduce the generated electromagnetic radiation noise and, by covering the compressor with the conductive housing, it is also possible to reduce the amount of external current leakage and, additionally, even the amount of external current flow from an earth wire. As compared with a conventional system in which a common-mode coil is inserted in a high-voltage (HV) line through which large currents on the order of several tens of amperes flow, it is necessary to merely bypass noise components on the order of several milliamperes, and thus, it is possible to eliminate the need for a large-capacitance common-mode coil and to reduce the size, weight, and cost. In particular, in the case of a vehicle-installed integrated-inverter electric compressor for which reduced size and weight are required, the omission of the large-capacitance common-mode coil is highly advantageous in terms of achieving reduced size and weight.

### {Brief Description of Drawings}

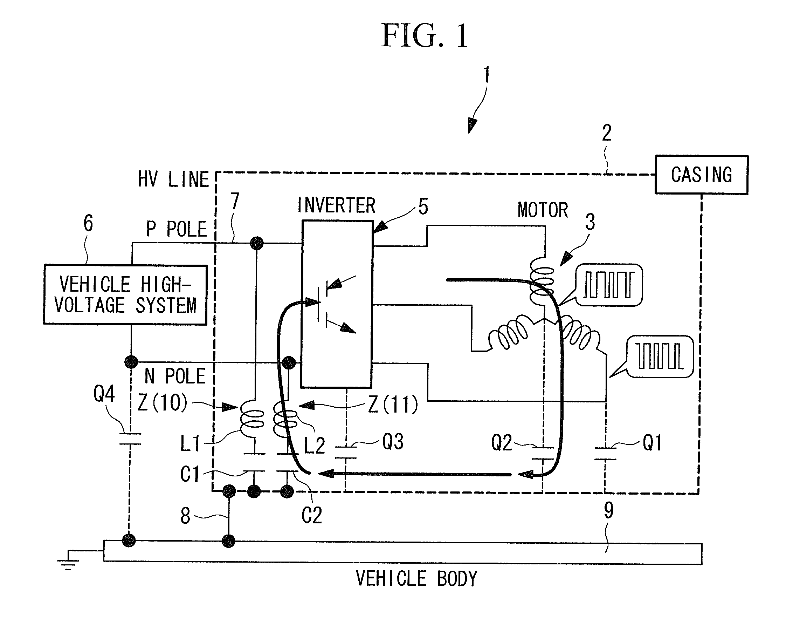

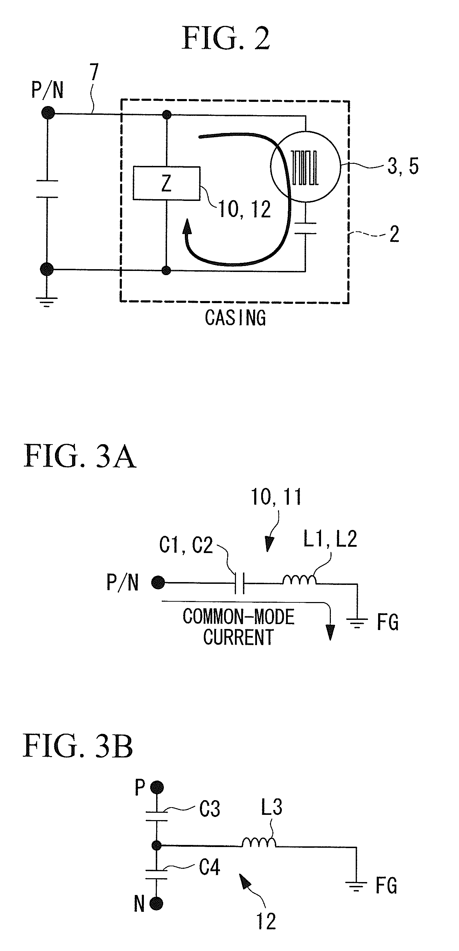

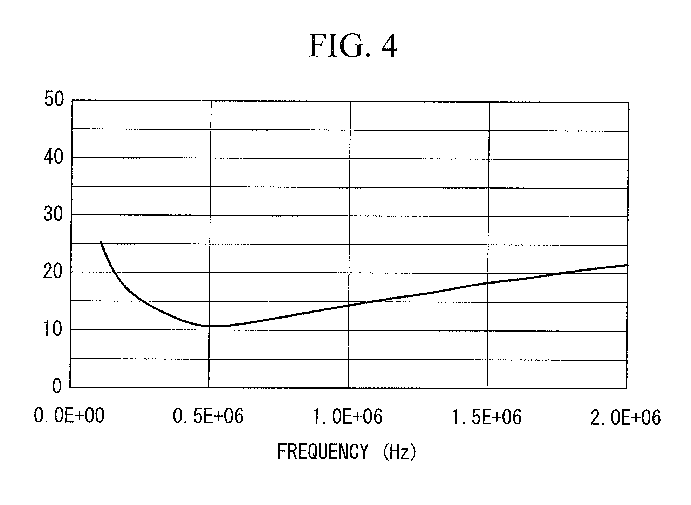

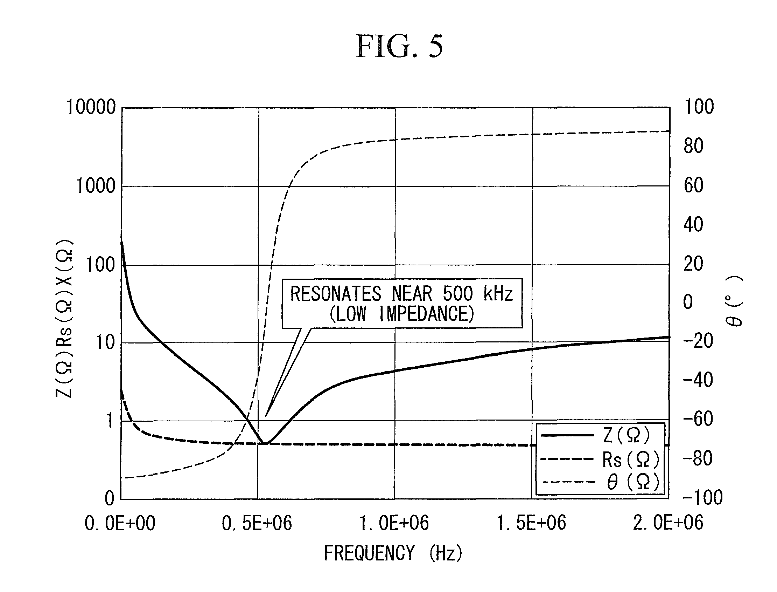

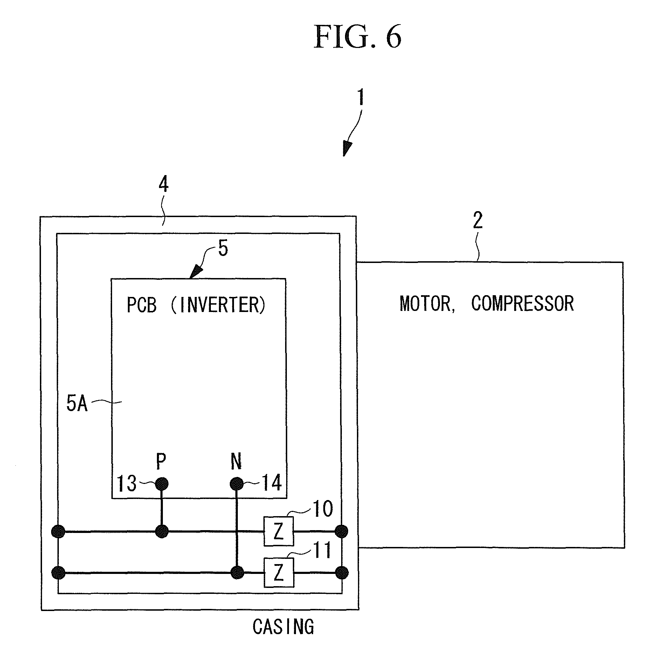

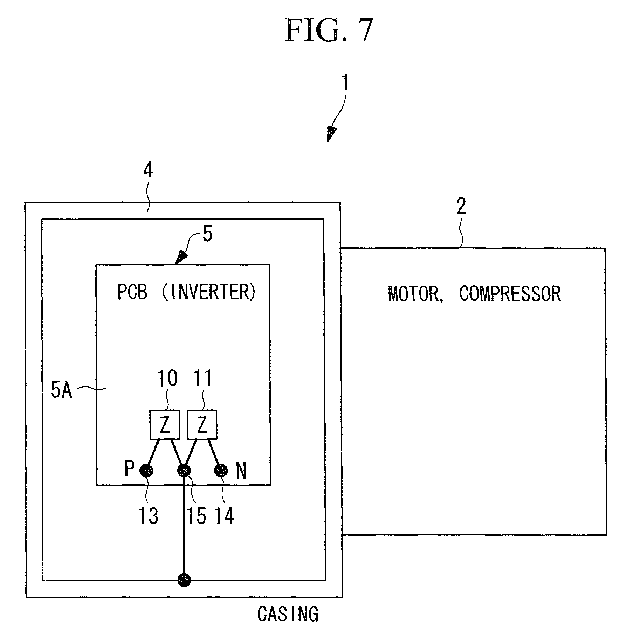

{Fig. 1} Fig. 1 is a schematic diagram of a motor driving circuit of an integrated-inverter electric compressor according to a first embodiment of the present invention.
{Fig. 2} Fig. 2 is a simplified diagram of the motor driving circuit shown in Fig. 1.
{Fig. 3A} Fig. 3A is a diagram showing the configuration of a different form of an impedance circuit shown in Figs. 1 and 2.
{Fig. 3B} Fig. 3B is a diagram showing the configuration of a different form of the impedance circuit shown in Figs. 1 and 2.
{Fig. 4} Fig. 4 is a diagram for explaining reduction effects on a harmonic current that externally leaks from the motor driving circuit shown in Fig. 1.
{Fig. 5} Fig. 5 is a diagram for explaining circuit characteristic in which a low impedance is achieved at a target frequency by means of the impedance circuit shown in Figs. 1 and 2.
{Fig. 6} Fig. 6 is a schematic diagram showing, in outline, the configuration of the integrated-inverter electric compressor shown in Fig. 1.
{Fig. 7} Fig. 7 is a schematic diagram showing, in outline, the configuration of an integrated-inverter electric compressor according to a second embodiment of the present invention.

### {Description of Embodiments}

Embodiments according to the present invention will be described below with reference to the drawings.

### {First Embodiment}

A first embodiment of the present invention will be described below by using Figs. 1 to 6.
Fig. 1 is a schematic diagram of a motor driving circuit of an integrated-inverter electric compressor according to the first embodiment of the present invention, and Fig. 2 is a simplified diagram thereof. In addition, Fig. 6 is a schematic diagram showing, in outline, the configuration of the integrated-inverter electric compressor.
An integrated-inverter electric compressor 1 is provided with a housing (casing) 2 constituted of an aluminum-die-cast conductor, and a compression mechanism (not shown) and an electric motor 3 that drives it are contained inside the housing 2.

An inverter accommodating portion 4 (see Fig. 6) is integrally molded at the periphery of the housing 2, and the integrated-inverter electric compressor 1 in which the inverter 5 is integrally installed at the periphery of the housing 2 is formed by installing the inverter 5 so as to be accommodated inside this inverter accommodating portion 4. This integrated-inverter electric compressor 1 is configured so that the electric motor 3 is driven by applying high-voltage DC power supplied to PN lines 7 of the inverter 5 from a battery in a vehicle-installed power-source unit 6 via a power cable (HV line) to the electric motor 3, which is contained inside the housing 2, after converting it to three-phase AC power having a command frequency by means of the inverter 5.

In general, the inverter 5 is provided with a semiconductor-switching circuit and performs speed control of the electric motor 3 by employing the PWM (Pulse Width Modulation) control method in which the output voltage is controlled by changing the current flow rate via a control circuit. The electric potentials of the inverter 5 and the electric motor 3 driven by the inverter 5 controlled by means of the PWM in this way contain a large number of harmonics. Note that the inverter 5 itself is a known unit, and detailed descriptions thereof will be omitted herein.

In the vehicle-installed integrated-inverter electric compressor 1, the inverter 5, the electric motor 3, and mechanical parts that constitute the compression mechanism are installed so as to be accommodated inside the single housing (casing) 2. As indicated by broken lines in Fig. 1, because stray capacitances Q1, Q2, and Q3 exist between this housing 2 and both the electric motor 3 and the inverter 5, harmonic currents generated at the electric motor 3 and the inverter 5 flow toward the housing 2. Because the housing 2 is normally chassis-grounded to a vehicle body 9 via an earth wire 8, the harmonic currents that have flowed toward the housing 2 flow into the vehicle body 9 via the earth wire 8.

Because a stray capacitance Q4 also exists between the vehicle body 9 and the vehicle-installed power-source unit 6, the harmonic currents that have flowed into the vehicle body 9 form a large current loop in which the currents flow into the PN lines 7 of the inverter 5 from the vehicle-installed power-source unit 6 via a power-source cable. When a large current loop is formed in this way by the harmonic currents, which are noise components generated at the electric motor 3 and the inverter 5, this results in large electromagnetic radiation noise, and, if the frequency band thereof is in the AM broadcasting frequency band, it acts as a radio-noise source.

Therefore, in order to reduce the noise currents described above, this embodiment employs the configuration in which small impedances Z having the same capacitance are individually inserted and connected between the housing 2 of the integrated-inverter electric compressor 1 and the PN lines 7 that input a high voltage to the inverter 5. As shown in Figs. 1 and 3A, the circuit configuration of the impedances Z is such that LC series circuits (LC filter circuits) 10 and 11, in which a capacitor C1 and a coil L1 and a capacitor C2 and a coil L2 that allow common-mode currents to flow are separately connected in series, are connected in parallel between the chassis-grounded housing 2 and both the positive pole and the negative pole of the PN lines 7.

As shown in Fig. 3B, the LC series circuits 10 and 11 described above may be substituted with an LC series circuit (LC filter circuit) 12 that is configured so that a circuit in which two capacitors C3 and C4 having the same capacitance are connected in series is connected between the positive pole and the negative pole of the PN lines 7 and a coil L3 is connected between an intermediate point M of that series-connected circuit and the chassis-grounded housing 2.

As specifically shown in Fig. 6, the impedances Z described above, that is, the LC series circuits 10 and 11, have a circuit configuration in which they are connected in parallel with each other between the chassis-grounded housing 2 and the PN terminals 13 and 14 provided in a control board (inverter board) 5A of the inverter 5, which is installed so as to be accommodated inside the inverter accommodating portion 4.

In this way, electromagnetic radiation noise is prevented from leaking outside by, as shown in Fig. 2, shielding with the conductive housing 2 by making the harmonic currents that act as noise components generated in the inverter 5 and the electric motor 3 flow in a small current loop formed completely inside the integrated-inverter electric compressor 1, by being bypassed to the PN lines 7 from the chassis-grounded housing 2 via the LC series circuits 10 and 11 so that the noise currents are returned to their generating sources.

In this way, this embodiment affords the following operational advantages.
The harmonic currents generated due to the PWM control of the inverter 5 flow to the chassis-grounded housing 2 via the stray capacitances Q1, Q2, and Q3. The harmonic currents that act as the noise components are bypassed to the impedances Z, that is, the LC series circuits (LC filter circuits) 10 and 11, that are individually inserted and connected in parallel between the housing 2 and both the positive pole and the negative pole of the PN lines 7 of the inverter 5 and that are set to have a low impedance at a reduction target frequency, so as to be returned to the generating sources of the noise currents.

In this way, the common-mode currents in the harmonic band that are generated in the electric motor 3 and the inverter 5 and that act as the noise components flow in the current loop, which is a small loop formed completely in the integrated-inverter electric compressor 1 that bypasses the currents to the PN lines 7 of the inverter 5 from the chassis-grounded conductive housing 2 of the integrated-inverter electric compressor 1 via the low-impedance LC series circuits 10 and 11.

Specifically, the impedances Z, which have the same small capacitance and which are individually formed of the LC series circuits 10 and 11, are inserted and connected in parallel between the housing 2 and the PN lines 7, and the resonance frequencies thereof are set to be close to a frequency required for noise reduction, so that a low impedance is achieved at the target frequency. Because of this, as shown in Fig. 5, the impedance can be sharply reduced at the target frequency. Fig. 5 shows a circuit characteristic diagram in which a frequency near 500 kHz is set to be the target frequency required for the reduction.

Therefore, with this embodiment, as shown in Fig. 4, it is possible to reduce the generated noise currents (electromagnetic radiation noise), and, by covering the compressor with the conductive housing 2, it is also possible to reduce the amount of external current leakage or the amount of external current flow from the earth wire 7. As compared with a conventional system in which, in order to reduce noise currents, a common-mode coil is inserted in an HV line through which large currents on the order of several tens of amperes flow, it is necessary to merely bypass noise components on the order of several milliamperes, and thus, it is possible to eliminate the need for a large-capacitance common-mode coil and to reduce the size, weight, and cost. In particular, in the case of the vehicle-installed integrated-inverter electric compressor 1 for which reduced size and weight are required, the omission of the large-capacitance common-mode coil is highly advantageous in terms of achieving reduced size and weight.

Because the LC series circuits 10 and 11 in which the capacitors C1 and C2 and the coils L1 and L2 are connected in series are employed as the impedances Z, as described above, the impedances can be sharply reduced at the target frequency by setting the resonance frequencies of the LC series circuits 10 and 11 to be, for example, close to the frequency required for the noise reduction and to have a low impedance at the target frequency required for the reduction. By doing so, for example, the radio noise in the AM broadcasting frequency band, which is considered problematic, can reliably be reduced.

The impedance characteristics can be balanced at both the positive pole and the negative pole by employing the configuration in which the LC series circuits 10 and 11 are individually inserted and connected in parallel between the housing 2 and the PN lines 7 and in which the LC series circuits 10 and 11, having the same capacitance, are individually connected in parallel to both PN lines 7, that is, to both the positive pole and the negative pole. Therefore, it is possible to reliably reduce the common-mode noise in the target frequency band by preventing imbalance.

By employing the LC series circuit 12, which is configured so that, as shown in Fig. 3B, the circuit in which the two capacitors C3 and C4 having the same capacitance are connected in series is connected between the PN lines 7 and the coil L3 is connected between the intermediate point M of that series-connected circuit and the housing 2, as the LC series circuit that forms the impedance Z to be inserted between the housing 2 and the PN lines 7, the LC series circuit 12 can be formed of the two capacitors C3 and C4 and the single coil L3. Because of this, as compared with the case in which series circuits including capacitors C and coils L are connected in parallel, it is possible to further simplify the configuration and to reduce costs by reducing the number of parts.

### {Second Embodiment}

Next, a second embodiment of the present invention will be described by using Fig. 7.
This embodiment differs from the first embodiment described above in terms of the manner in which the impedances Z are inserted and connected. Because other points are the same as those in the first embodiment, descriptions thereof will be omitted.
As shown in Fig. 7, this embodiment has a configuration in which the impedances Z to be inserted and connected between the housing (casing) 2 of the integrated-inverter electric compressor 1 and the PN lines, that is, the LC series circuits 10 and 11 (12) in which the capacitors C and the coils L are connected in series, are installed in the control board (inverter board) 5A of the inverter 5.

Specifically, this embodiment has a configuration in which the impedances Z that are formed of the LC series circuits 10 and 11 (12) are installed on the control board 5A of the inverter 5 between the PN terminals 13 and 14 provided in the control board (inverter board) 5A of the inverter 5, installed so as to be accommodated inside the inverter accommodating portion 4 of the housing 2, and the earth terminal 15 connected to the housing 2.

In this way, with this embodiment, the impedances Z formed of the LC series circuits 10 and 11 (12) are provided on the control board 5A between the PN terminals 13 and 14 of the control board 5A of the inverter 5 that is installed in the housing 2 and the earth terminal 15 connected to the housing 2. Because of this, it is possible to simplify the installation of the circuits for reducing the electromagnetic radiation noise in the inverter 5 and to achieve space saving with respect to the space for installing the inverter 5 itself in the housing 2. Therefore, it is possible to enhance the ease-of-assembly for the integrated-inverter electric compressor 1, and it is also possible to enhance the ease-of-installation in a vehicle or the like by realizing size and weight reduction thereof.

The present invention is not limited to the invention according to the embodiments described above, and appropriate modifications are permissible within a range that does not depart from the spirit thereof. For example, in terms of the configuration of the electric compressor 1 for installing the inverter 5 in the housing 2, there are various conceivable methods, and the method is not particularly limited. In terms of the impedances Z to be inserted between the housing 2 and the PN lines 7, although examples of the LC series circuits have been described, they are not necessarily limited only to the series circuits including the capacitors C and the coils L, and filter circuits formed of other components may be employed.

### {Reference Signs List}

- 1: integrated-inverter electric compressor
- 2: housing (casing)
- 3: electric motor
- 5: inverter
- 5A: control board (inverter board)
- 7: PN line
- 10, 11, 12: LC series circuit
- 13, 14: PN terminal
- 15: earth terminal
- C1, C2, C3, C4: capacitor
- L1, L2, L3: coil
- Z: impedance

## Claims

1. An integrated-inverter electric compressor in which an inverter that controls power to be applied to an electric motor is integrally installed in a housing that contains, inside thereof, a compression mechanism and the electric motor that drives the compression mechanism,
wherein impedances having the same capacitance are individually inserted and connected between the housing, which is chassis-grounded and into in which harmonic currents from the inverter and the electric motor flow, and PN lines that supply power from a power source to the inverter.

2. An integrated-inverter electric compressor according to Claim 1, wherein LC series circuits in which capacitors C and coils L are connected in series are employed as the impedances.

3. An integrated-inverter electric compressor according to Claim 2, wherein the LC series circuits are individually inserted and connected in parallel between the housing and the PN lines.

4. An integrated-inverter electric compressor according to Claim 2 or 3, wherein the LC series circuit has a circuit configuration in which a circuit including two capacitors C, which have the same capacitance and which are connected in series, is connected between the PN lines, and the coil L is connected between an intermediate point of that series-connected circuit and the housing.

5. An integrated-inverter electric compressor according to any one of Claims 1 to 4, wherein the impedances are provided on an inverter board between PN terminals of the inverter board side, which is installed in the housing, and an earth terminal connected to the housing.
